# EUROPEAN PATENT APPLICATION

(11) **EP 4 120 164 A1**
(43) Date of publication of application: **18.01.2023**
(21) Application number: 22169726.1
(22) Date of filing: 25.04.2022
(51) Int. Cl.: G06Q 10/10, G06Q 50/00

(54) **METHOD AND APPARATUS FOR SHARING PICTURES**

(30) Priority: 16.07.2021 CN 202110808695
(71) Applicant: Beijing Dajia Internet Information Technology Co., Ltd., Beijing 100085 (CN)
(72) Inventor: YU, Yang, Beijing, 100085 (CN); WANG, Kaiwen, Beijing, 100085 (CN)
(74) Representative: Yang, Shu

(57) **Abstract**

Provided is a method and an apparatus for sharing pictures, which belongs to the field of Internet technologies. The method includes: displaying a share panel including a plurality of application icons; displaying (201, 301), in the share panel, at least one second account having a social relationship with a first account in response to a trigger operation on an application icon of a target application; displaying (202, 302) a picture share page in response to a select operation on any second account; and sending(203, 305), in response to a trigger operation on the send control, the at least two pictures to a second terminal corresponding to a selected second account selected by a select operation, so that the second terminal is capable of receiving the at least two pictures.

## Description

### TECHNICAL FIELD

The present disclosure relates to the field of Internet technologies, and in particular, relates to a method and an apparatus for sharing pictures.

### BACKGROUND

A terminal is generally provided with a picture set (that is, a local album). A user can share a picture in the picture set with other account on a specific application via an operation on the terminal. The specific application may be a social media application where the user associates with other accounts (friend accounts for example). The terminal of the user can have a plurality of applications where the user associates with other accounts (applications A, B, C, D for example). When the user wants to share a picture to an associated account in the specific application (application A for example), the user needs to activate the specific application so that an interface of the associated account is displayed. Then, the user can activate a share control to activate the display of a plurality of pictures in the picture set in the terminal and select the picture to be shared and send the picture to the terminal corresponding to the associated account. The above approach requires several interaction paths to achieve the picture sharing and can be time consuming.

### SUMMARY

Embodiments of the present disclosure provide a method for sharing pictures, and an apparatus.

According to one aspect of the embodiments of the present disclosure, a method for sharing pictures is provided. The method includes: displaying a share panel including a plurality of application icons; displaying, in the share panel, at least one second account having a social relationship with a first account in response to a trigger operation on an application icon of a target application, wherein the first account is a logged-in account on the first terminal, and the target application is an application corresponding to the application icon triggered by a user; displaying a picture share page in response to a select operation on any second account, wherein the picture share page displays at least two pictures and a send control; and sending, in response to a trigger operation on the send control, the at least two pictures, to a second terminal corresponding to a selected second account selected by a select operation, so that the second terminal is capable of receiving the at least two pictures.

In some embodiments, displaying the picture share page includes: displaying an edit panel in a displayed picture share page, wherein the edit panel is used for inputting text information; and after displaying a picture share page in response to a select operation on any second account, the method further includes: sending the text information input from the edit panel in response to the trigger operation on the send control.

In some embodiments, displaying the edit panel in the displayed picture share page includes: automatically displaying the edit panel in the displayed picture share page; or displaying the edit panel in the displayed picture share page, in response to a trigger operation on a text input box in the picture share page.

In some embodiments, displaying the picture share page includes: displaying a first quantity of pictures in a displayed picture share page; or displaying a second quantity of pictures and a picture view control in the displayed picture share page, wherein the second quantity is less than the first quantity, and the picture view control is used for viewing unshown pictures.

In some embodiments, upon displaying a picture share page in response to a select operation on any second account, the method further includes at least one of: displaying, in response to a slide operation on a picture display region of the picture share page, a picture corresponding to the slide operation; displaying, in response to a position adjust operation on any picture in the picture share page, an adjusted position to which the picture moves; and deleting the picture from the picture share page in response to a delete operation on any picture in the picture share page.

In some embodiments, displaying the picture share page includes: displaying, in a displayed picture share page, a selected second account and unselected second accounts having a social relationship with the first account in the target application; and after displaying a picture share page in response to a select operation on any second account, the method further includes: displaying, in response to a select operation on the unselected second account, the unselected second account as being selected.

In some embodiments, displaying the picture share page includes: displaying an account search box in the displayed picture share page, wherein the account search box is used for searching for an account; and after displaying a picture share page in response to a select operation on any second account, the method further includes: displaying, based on an account search keyword input in the account search box, an account corresponding to the account search keyword.

In some embodiments, the method further includes: displaying options corresponding to a plurality of pictures in the picture set of the first terminal; determining selected picture as the picture to be shared in response to a select operation on the options corresponding to the plurality of pictures; and displaying, in response to a trigger operation on a share control, the at least one second account having the social relationship with the first account in the target application.

In some embodiments, upon sending, in response to a trigger operation on the send control, the at least two pictures, so that a second terminal corresponding to a second account selected by the select operation is capable of receiving the at least two pictures, the method further includes at least one of: displaying a session page of the selected second account in the target application, wherein the session page is configured to display a session record between the first account and the selected second account; displaying a live-streaming room page of the selected second account in the target application, wherein the live-streaming room page is configured to display a live-streaming screen of the selected second account; displaying a personal page of the selected second account in the target application, wherein the personal page is configured to display account information of the selected second account; and displaying a moment page of the selected second account in the target application, wherein the moment page is configured to display moments of the selected second account.

In some embodiments, after sending, in response to a trigger operation on the send control, the at least two pictures, so that a second terminal corresponding to a second account selected by the select operation is capable of receiving the at least two pictures, the method further includes: displaying share prompt information of the picture, wherein the share prompt information is configured to indicate that the at least two pictures are in a share process or the at least two pictures have been successfully shared.

According to another aspect of the embodiments of the present disclosure, an apparatus is provided. The an apparatus includes an account displaying unit configured to: display, in the share panel, at least one second account having a social relationship with a first account in response to a trigger operation on an application icon of a target application, wherein the first account is a logged-in account on the first terminal, and the target application is an application corresponding to the application icon triggered by a user; display a picture share page in response to a select operation on any second account, wherein the picture share page displays at least two pictures and a send control; and send, in response to a trigger operation on the send control, the at least two pictures, to a second terminal corresponding to a selected second account selected by a select operation, so that the second terminal is capable of receiving the at least two pictures.

According to another aspect of embodiments of the present disclosure, a non-volatile computer-readable storage medium storing one or more program codes therein is provided. The one or more program codes, when loaded and executed by a processor of a computer device, cause the computer device to perform: displaying a share panel including a plurality of application icons; displaying, in the share panel, at least one second account having a social relationship with a first account in response to a trigger operation on an application icon of a target application, wherein the first account is a logged-in account on the first terminal, and the target application is an application corresponding to the application icon triggered by a user; displaying a picture share page in response to a select operation on any second account, wherein the picture share page displays at least two pictures and a send control; and sending, in response to a trigger operation on the send control, the at least two pictures, to a second terminal corresponding to a selected second account selected by a select operation, so that the second terminal is capable of receiving the at least two pictures.

### BRIEF DESCRIPTION OF THE DRAWINGS

FIG. 1 is a schematic diagram of an implementation environment of a method for sharing pictures according to an exemplary embodiment;
FIG. 2 is a flowchart showing a method for sharing pictures according to an exemplary embodiment;
FIG. 3 is a flowchart showing a method for sharing pictures according to an exemplary embodiment;
FIG. 4 is a schematic diagram of a share panel according to an exemplary embodiment;
FIG. 5 is a schematic diagram of a picture share page according to an exemplary embodiment;
FIG. 6 is a schematic diagram of a picture share page according to an exemplary embodiment;
FIG. 7 is a schematic diagram of a picture share page according to an exemplary embodiment;
FIG. 8 is a schematic diagram of a picture share page according to an exemplary embodiment;
FIG. 9 is a schematic diagram of a picture share page according to an exemplary embodiment;
FIG. 10 is a flowchart showing an apparatus for sharing pictures according to an exemplary embodiment; and
FIG. 11 is a structural block diagram of a first terminal according to an exemplary embodiment.

### DETAILED DESCRIPTION

Data involved in the present disclosure is information authorized by a user or fully authorized by all parties.

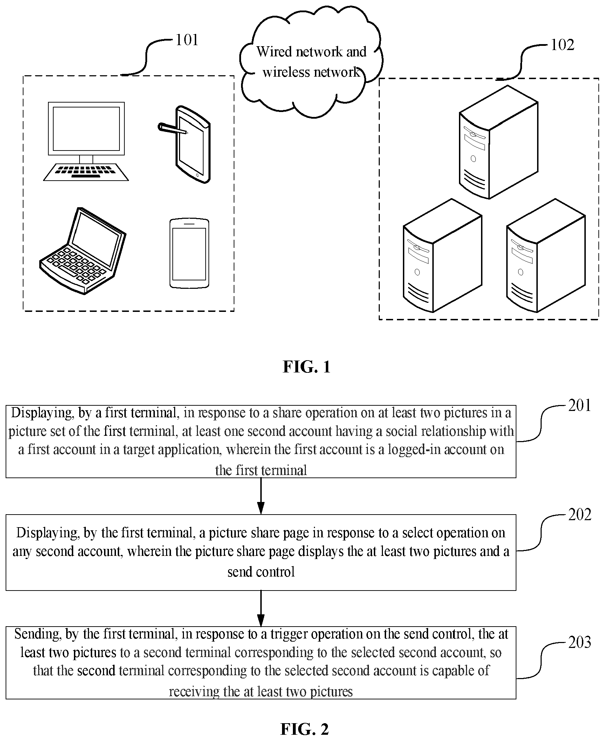

FIG. 1 is a schematic diagram of an implementation environment of a method for sharing pictures according to an embodiment of the present disclosure. Referring to FIG. 1, the implementation environment includes a first terminal 101 and a server 102.

The first terminal 101 is at least one of a smart phone, a smart watch, a desktop computer, a laptop computer, a virtual reality terminal, an augmented reality terminal, a wireless terminal, and a laptop portable computer. The first terminal 101 has a communication function and can access to a wired network or a wireless network. In some embodiments, the first terminal 101 generally refers to one of a plurality of terminals. The embodiments of the present disclosure may be illustrated by taking the first terminal 101 as an example.

In some embodiments, the first terminal 101 operates various types of applications, such as short video applications, social media applications, and live-streaming applications. In the embodiments of the present disclosure, an application operating on the first terminal 101 is referred to as a target application in the case that a user shares pictures with the accounts associated with the application. In the embodiments of the present disclosure, the first terminal 101 is configured to: display, in response to a share operation on at least two pictures in a picture set of a first terminal, at least one second account having a social relationship with a first account in a target application (e.g., the relationship has been established via the target application), wherein the first account is a logged-in account on the first terminal 101 in the target application; display a picture share page in response to a select operation on any second account, wherein the picture share page displays the at least two pictures and a send control; and send, in response to a trigger operation on the send control, the at least two pictures, so that the second terminal corresponding to a second account selected by the select operation is capable of receiving the at least two pictures.

The server 102 is an independent physical server. In some embodiments, the server 102 is a server cluster composed of a plurality of physical servers, a distributed file system. In other embodiments, the server 102 is a could server that provides cloud services, cloud databases, cloud computing, cloud functions, cloud storage, network services, cloud communications, middleware services, domain name services, security services, content delivery network (CDN), and basic cloud computing services such as big data, artificial intelligence platforms. The server 102 and the first terminal 101 are directly or indirectly connected through wired or wireless communication, which is not limited in the embodiments of the present disclosure. In some embodiments, the server 102 further includes other functional servers to provide more comprehensive and diversified services. In the embodiments of the present disclosure, the server 102 is a background server of the target application. The server 102 is configured to receive a picture share request from the first terminal 101, and send, in response to the picture share request, the at least two pictures, so that a second terminal corresponding to the second account to be shared is capable of receiving the at least two pictures.

FIG. 2 is a flowchart showing a method for sharing pictures according to an exemplary embodiment. As shown in FIG. 2, the method is applicable to a computer device, and the computer device is the first terminal shown in the FIG. 1. Exemplarily, the method includes the following processes.

In S201, the first terminal displays, in response to a share operation on at least two pictures in a picture set of the first terminal, at least one second account having a social relationship with a first account in a target application, wherein the first account is a logged-in account on the first terminal.

In S202, the first terminal displays a picture share page in response to a select operation on any second account, wherein the picture share page displays the at least two pictures and a send control.

In 203, the first terminal sends, in response to a trigger operation on the send control, the at least two pictures to a second terminal corresponding to the selected second account, so that the second terminal corresponding to the selected second account is capable of receiving the at least two pictures.

With the technical solutions according to the embodiments of the present disclosure, based on a share operation on at least two pictures in a picture set, the first terminal is enabled to trigger the display of a second account having a social relationship with a first account in a target application, the display of a picture share page in response to a select operation on any one of a plurality of second accounts and the display of a send control. Subsequently, the selected pictures can be sent in response to the activation of the send control. Since the amount of information displayed by the picture share page is increased, a user can view the picture to be shared. Furthermore, the send control is provided to trigger the sending of the pictures to the second account for sharing on the picture share page. In this way, the sharing pictures with the second account can be realized based on the picture set without the need to access the target application first and then perform the operation of sharing the picture, which reducing interaction paths of sharing pictures and improving the efficiency of sharing pictures.

In some embodiments, displaying the picture share page includes: displaying an edit panel in the displayed picture share page, wherein the edit panel is used for inputting text information; and upon displaying the picture share page in response to the select operation on any second account, the method further includes: sending the text information input from the edit panel in response to the trigger operation on the send control, so that the second terminal is capable of receiving the text information.

In some embodiments, displaying the edit panel in the displayed picture share page includes: automatically displaying the edit panel in the displayed picture share page; or displaying the edit panel in the displayed picture share page in response to a trigger operation on a text input box in the picture share page.

In some embodiments, a quantity of the pictures is a first quantity; and displaying the picture share page includes: displaying the first quantity of pictures in the displayed picture share page; or displaying a second quantity of pictures and a picture view control in the displayed picture share page, wherein the second quantity is less than the first quantity, and the picture view control is used for viewing unshown pictures.

In some embodiments, upon displaying the picture share page in response to the select operation on any second account, the method further includes: displaying, in response to a slide operation on a picture display region of the picture share page, the picture corresponding to the slide operation; displaying, in response to a position adjust operation on any picture in the picture share page, an adjusted position to which the picture moves; and deleting the picture from the picture share page in response to a delete operation on any picture in the picture share page.

In some embodiments, displaying the picture share page includes: displaying, in the displayed picture share page, the selected second account and unselected second accounts having a social relationship with the first account on the first terminal; and upon displaying the picture share page in response to the select operation on any second account, the method further includes: displaying, in response to a select operation on the unselected second account, the unselected second account as being selected.

In some embodiments, displaying the picture share page includes: displaying an account search box in the displayed picture share page, wherein the account search box is used for searching for an account; upon displaying, in response to the select operation on any second account, the picture share page, the method further includes: displaying, based on an account search keyword input in the account search box, a second account corresponding to the account search keyword.

In some embodiments, displaying, in response to the share operation on the at least two pictures in the picture set of the first terminal, the at least one second account having the social relationship with the first account on the first terminal includes: displaying options corresponding to a plurality of pictures in the picture set of the first terminal; determining the selected picture as the picture to be shared in response to a select operation on the options corresponding to the plurality of pictures; and displaying, in response to a trigger operation on a share control, the at least one second account having the social relationship with the first account on the first terminal.

In some embodiments, sending, in response to the trigger operation on the send control, the at least two pictures further includes: displaying a session page of the selected second account in the target application, wherein the session page is configured to display a session record between the first account on the first terminal and the selected second account; displaying a live-streaming room page of the selected second account in the target application, wherein the live-streaming room page is configured to display a live-streaming screen of the selected second account; displaying a personal page of the selected second account in the target application, wherein the personal page is configured to display account information of the selected second account; or displaying a moment page of the selected second account in the target application, wherein the moment page is configured to display moments of the selected second account.

In some embodiments, upon sending, in response to the trigger operation on the send control, the at least two pictures, the method further includes: displaying share prompt information of the at least two pictures, wherein the share prompt information is configured to indicate that the at least two pictures are in the share process or that the at least two pictures have been successfully shared.

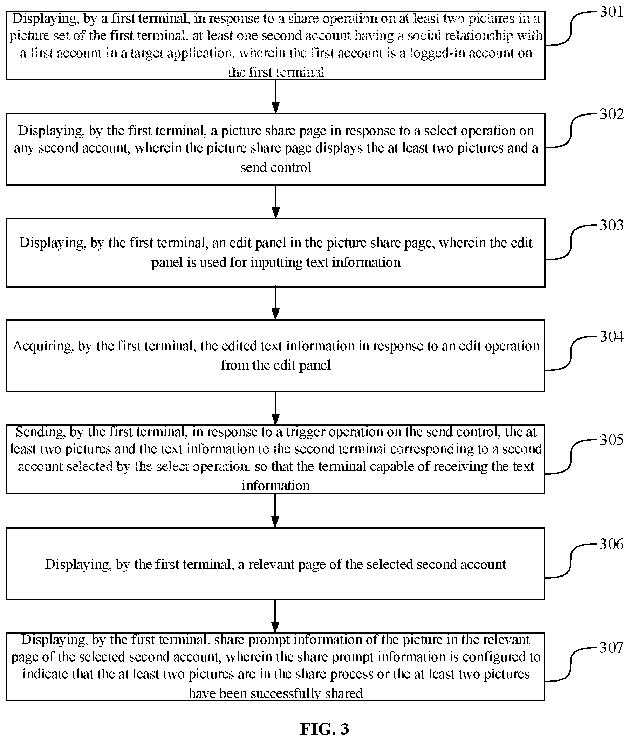

FIG. 2 only illustrates the basic flow of the present disclosure. The schemes of the present disclosure are further explained hereinafter based on a specific embodiment. FIG. 3 is a flowchart showing a method for sharing pictures according to an exemplary embodiment. Referring to FIG. 3, the method is applicable to a computer device, and the computer device is the first terminal shown in the FIG. 1. The method includes the following processes.

In S301, the first terminal displays, in response to a share operation on at least two pictures in the picture set of the first terminal, at least one second account having a social relationship with a first account in a target application, wherein the first account is a logged-in account on the first terminal.

In the embodiments of the present disclosure, the picture set is a picture file, such as a local photo album of the first terminal. In some embodiments, the picture set is an iPhone operating system (iOS) album. The at least two pictures refer to two or more than two pictures in the plurality of pictures in the picture set.

The social relationship refers to an association relationship between two user accounts in the social dimension, such as friend relationship, fan relationship, and the like. In some embodiments, the target application is a short video application. Correspondingly, the at least one second account having the social relationship with the first account on the first terminal is at least one of the accounts followed by the first account on the first terminal, an account that has followed the first account on the first terminal, or an account that has been followed by the first account on the first terminal and has followed the first account on the first terminal as well. In some embodiments, the target application is a social media application. Correspondingly, the at least one second account having the social relationship with the logged-in account on the first terminal is a friend account of the first account on the first terminal.

In some embodiments, the first terminal displays the options corresponding to the plurality of pictures in the picture set of the first terminal, determines the selected picture as the picture to be shared in response to the select operation on the options corresponding to the plurality of pictures, and displays at least one second account having the social relationship with the first account on the first terminal in response to the trigger operation on the share control. In the embodiments of the present disclosure, by displaying the options corresponding to the plurality of pictures in the picture set, the user can select the picture to be shared based on the options corresponding to the plurality of pictures, and then trigger the display of the at least one second account having the social relationship with the first account on the first terminal via the share control, such that the user may determine the second account to be shared based on the at least one second account.

The processes that the first terminal triggers the display of the options corresponding to the plurality of pictures is detailed as follows. In some embodiments, the first terminal triggers the display of the options corresponding to the plurality of pictures based on the picture select control in the picture set, wherein the picture select control is used for triggering selection of a picture in the picture set. The corresponding process is that, the first terminal displays the options corresponding to the plurality of pictures in response to the trigger operation on the picture select control in the picture set, such that the user can perform a subsequent process of selecting the picture to be shared based on the options corresponding to the pictures. In some embodiments, the first terminal triggers the display of the options corresponding to the plurality of pictures based on the trigger operation on the pictures in the picture set. The corresponding process is that the first terminal displays the options corresponding to the plurality of pictures in response to a long-press operation on the pictures in the picture set, such that the user can perform the subsequent process of selecting the picture to be shared based on the options corresponding to the pictures. One picture corresponds to one option. In the case that the user wants to share a picture, the user performs a tap operation on the option corresponding to the picture, such that the first terminal determines the picture corresponding to the option as the picture to be shared in response to the tap operation on the option by the user.

In some embodiments, the first terminal displays a share panel in response to the trigger operation on the share control, and the share panel includes at least one second account. In some embodiments, the first terminal, based on preset screening conditions, selects second accounts satisfying the screening conditions from at least one second account having the social relationship with the first account on the first terminal to display, and the corresponding process includes the following processes.

In some embodiments, the first terminal acquires an interaction record of the first account on the first terminal in response to the trigger operation on the share control, determines a second account whose friendship with the first account satisfies a friendship condition based on the interaction record of the first account, and displays the determined second account in the share panel. The interaction record is configured to record an interaction behavior of the first account on the first terminal. The friendship is used to represent the interaction frequency between two user accounts, and the friendship condition is configured to determine the second account having a friendship relationship with the first account on the first terminal. That is, the second account having a high interaction frequency with the first account on the first terminal is determined. In some embodiments, the interaction is in the form of a quantity or the like. In some embodiments, the friendship condition is that the number of interactions is greater than a friendship threshold. In this way, by prioritizing the display of second accounts with close relationships, the displayed second accounts are the accounts of interest to the user, which can attract the user to share pictures, and improve the interaction experience of the user.

In some embodiments, the first terminal acquires a picture share record of the first account on first the terminal in response to the trigger operation on the share control, determines a second account that satisfies a picture share condition based on the picture share record of the first account, and displays the determined second account in the share panel. In some embodiments, the picture share condition is a second account with the greatest number of share times of sharing the picture, or a second account with the share timing closest to the current time, or the like. The share times represent times of sharing pictures by the first account on the first terminal with the second account in a certain period (e.g., shared picture 20 times in a month), and the share timing represents the time when pictures were shared by the logged-in account on the first terminal. In this way, by prioritizing the display of second accounts that satisfy the picture share condition, the displayed second accounts are accounts of interest to the user, which can attract the user to share pictures and improve the interaction experience of the user.

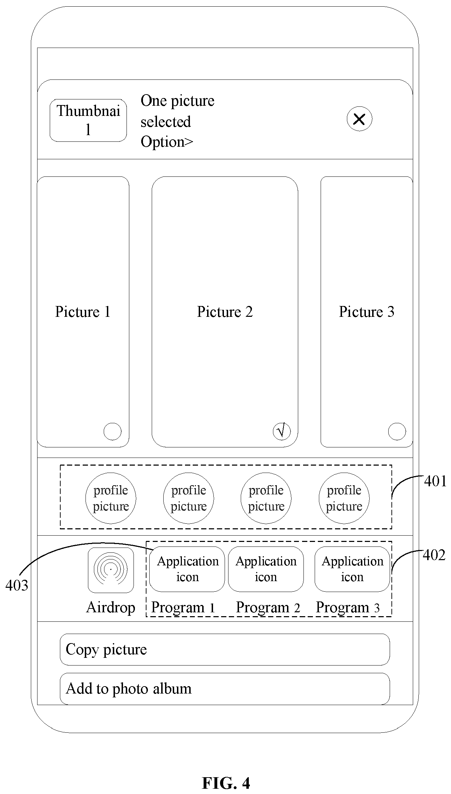

For example, FIG. 4 is a schematic diagram of a share panel according to an exemplary embodiment. Referring to FIG. 4, the at least one second account having the social relationship with the first account on the first terminal is displayed in a manner of displaying a profile picture in an account display region 401 in the share panel shown in FIG. 4.

In some other embodiments, the first terminal displays the share panel in response to the trigger operation on the share control. The user of the first terminal may have established relations with certain accounts in the plurality of applications, that is, the user has associated accounts in each of the applications. For each application, the user may have different associated accounts. In some embodiments, the share panel displays a plurality of application icons corresponding to the plurality of applications. In response to a trigger operation on an application icon, the application becomes a target application or the target application is an application corresponding to an application icon triggered by a user. The terminal displays, in response to the trigger operation on the icon of the target application, at least one second account having the social relationship with the first account on the first terminal.

In an exemplary embodiment, referring to FIG. 4, icons of a plurality of applications are displayed in an application display region 402 in the share panel shown in FIG. 4, and then at least one second account having the social relationship with the first account on the first terminal in the application is displayed in response to a trigger operation on the icon of this application. For example, if the application icon corresponding to program 1 (i.e., application 403) in the application display region 402 is triggered, the application 403 is a target application. In response to the trigger operation, a plurality of profile pictures of the second accounts associated with the target application 403 are displayed in the account display region 401. The displayed profile pictures represent the second accounts having a social relationship with the first account in the target application (i.e., the triggered application 403).

In S302, the first terminal displays a picture share page in response to a select operation on any second account, wherein the picture share page displays the at least two pictures and the send control.

In some embodiments, the process of displaying, by the first terminal, the at least two pictures in the picture share page includes the step of 302A or the step of 302B.

In S302A, in some embodiments, the first terminal displays all pictures to be shared in the picture share page. Taking the quantity of the pictures as a first quantity as an example, the corresponding process is that, the first terminal displays the first quantity of pictures in the displayed picture share page.

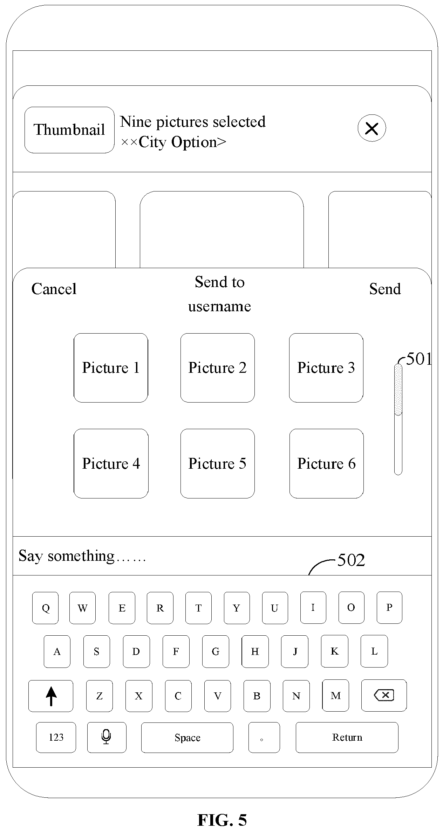

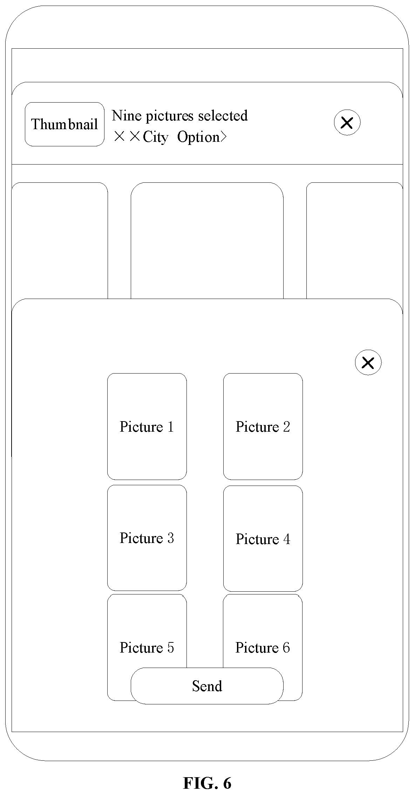

The first quantity represents the quantity of pictures to be displayed. For example, FIG. 5 is a schematic diagram of a picture share page according to an exemplary embodiment. Referring to FIG. 5, taking the first quantity being 9 as an example, nine pictures to be shared are displayed in the picture share page shown in FIG. 5. FIG. 6 is a schematic diagram of a picture share page according to an exemplary embodiment. Referring to FIG. 6, taking the first quantity being 9 as an example, nine pictures to be shared are displayed in the picture share page shown in FIG. 6.

In S302B, in some embodiments, the first terminal displays a part of pictures to be shared in the picture share page. The corresponding process is that, the first terminal displays a second quantity of pictures and a picture view control in the displayed picture share page, the second quantity is less than the first quantity, and the picture view control is used for viewing unshown pictures. The second quantity is a preset fixed quantity, e.g., 3.

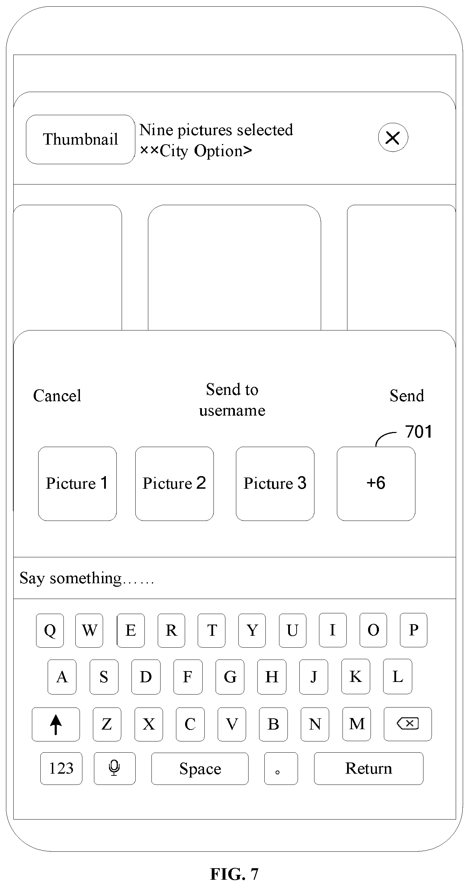

The second quantity represents the quantity of part of pictures in the pictures to be displayed. In some embodiments, the second quantity is a preset and fixed quantity. In an exemplary embodiment, FIG. 7 is a schematic diagram of a picture share page according to an exemplary embodiment. Referring to FIG. 7, taking the first quantity being 9 and the second quantity being 3 as an example, three pictures to be shared, i.e., a picture 1, a picture 2, and a picture 3, are displayed, and pictures 4 to 9 are folded, in the picture share page shown in FIG. 7. The picture view control is a "control 701" shown in FIG. 7, and the "6" shown in the "control 701" is used for indicating the quantity of unshown pictures, that is, the quantities of pictures 4 to 9.

In the embodiments of the present disclosure, two manners of displaying the pictures to be shared are provided. By displaying a total quantity of pictures, the user can view all pictures to be shared conveniently. By displaying a partial quantity of pictures, a better displaying effect of the pictures can be ensured. In addition, in the case of displaying a partial quantity of pictures, by providing the picture view control, the user can view the unshown pictures based on the picture view control, thereby improving the interaction experience of the user.

In some embodiments, the first terminal can further perform the following operations based on the displayed picture. (1) In some embodiment, the first terminal displays, in response to a slide operation on a picture display region of the picture share page, the picture corresponding to the slide operation.

In some embodiments, the first terminal displays, in response to a slide-up operation on the picture display region of the picture share page, the picture corresponding to the slide-up operation; or the first terminal displays, in response to a slide-down operation on the picture display region of the picture share page, the picture corresponding to the slide-down operation. For example, referring to FIG. 5, a "slide key 501" is displayed in the picture share page shown in FIG. 5, such that a picture along corresponding sliding direction can be viewed by sliding up and down by the "slide key 501;" and referring to FIG. 6, a picture along corresponding sliding direction can also be viewed by sliding up and down in a picture display region shown in FIG. 6.

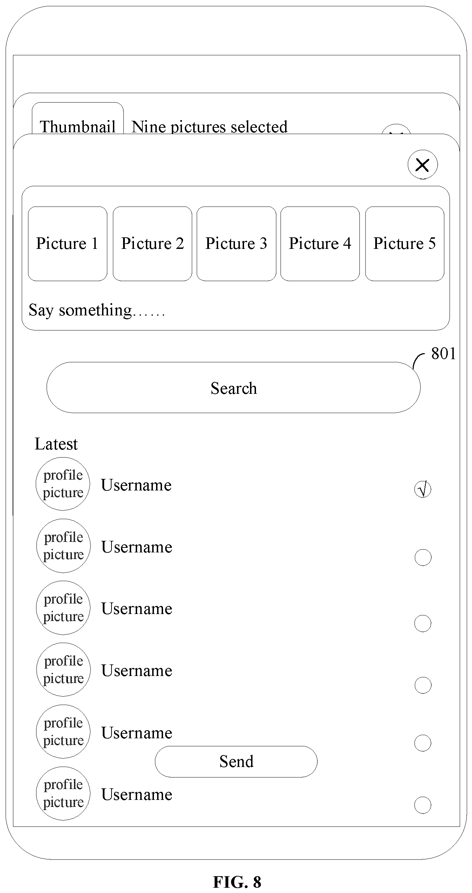

In some embodiments, the first terminal displays, in response to a slide-to-left operation on the picture display region of the picture share page, the picture corresponding to the slide-to-left operation; or the first terminal displays, in response to a slide-to-right operation on the picture display region of the picture share page, the picture corresponding to the slide-to-right operation. For example, FIG. 8 is a schematic diagram of a picture share page according to an exemplary embodiment. In the picture display region shown in FIG. 8, by sliding to the left and right, the pictures along corresponding sliding directions can be viewed.

In some embodiments of the present disclosure, the slide operation on the picture display region helps to trigger the display of the corresponding picture, such that the user can view the picture to be shared, thereby simplifying the operations and improving the efficiency of human-computer interaction.

(2) In some embodiments, the first terminal displays, in response to a position adjust operation on any picture in the picture share page, an adjusted position to which the picture moves. In some other embodiments, the position adjust operation is a drag operation. In some embodiments, the first terminal displays, in response to the drag operation on any picture in the picture share page, the displacement of the picture with the drag operation.

It should be noted that the position of the picture in the picture share page is related to a sending sequence of the picture. By adjusting the position of the picture, the picture is sent based on the sending sequence corresponding to the position where the picture is located, thereby achieving the effect of adjusting the sending sequence of the picture. In the embodiments of the present disclosure, the position of the picture to be shared can be adjusted by the position adjust operation on the picture, such that the user can adjust the position of the picture, without returning to the picture set, thereby simplifying the operations and improving the efficiency of human-computer interaction.

(3) In some embodiment, the first terminal deletes the pictures from the picture share page, that is, stops displaying the pictures, in response to a delete operation on any picture in the picture share page. In the embodiments of the present disclosure, the user can cancel share of the picture by performing the delete operation on the picture in the picture share page, without returning to the picture set, thereby simplifying the operations and improving the efficiency of human-computer interaction.

In the embodiments of the present disclosure, the user can view the pictures to be shared by displaying the at least two pictures to be shared in the picture share page. Furthermore, the user can further adjust the pictures to be shared conveniently, without returning to an interface of the picture set, thereby improving the efficiency of human-computer interaction.

In S303, the first terminal displays an edit panel in the picture share page, wherein the edit panel is used for inputting text inform ation.

In some embodiments, the first terminal automatically displays the edit panel in the displayed picture share page. For example, referring to FIG. 5, the edit panel is a "keyboard panel 502" shown in FIG. 5. In the picture share page shown in FIG. 5, the "keyboard panel 502" is automatically displayed when the at least two pictures are displayed.

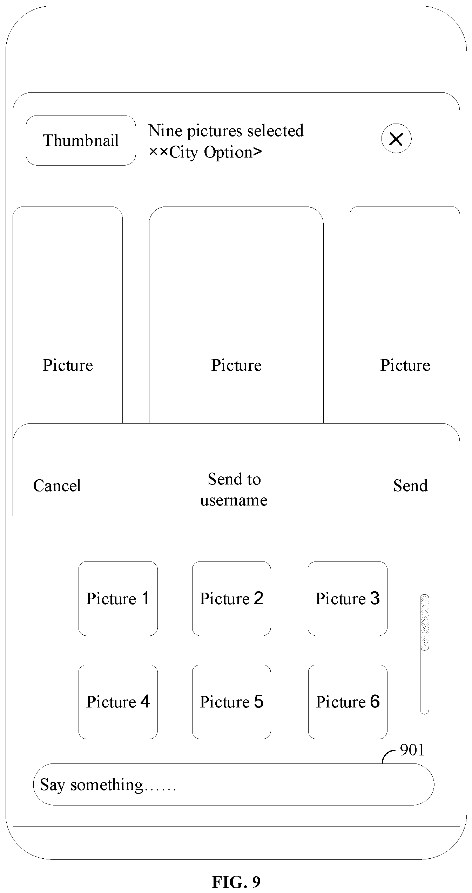

In some embodiments, the first terminal displays the edit panel in the displayed picture share page, in response to a trigger operation on a text input box in the picture share page. For example, FIG. 9 is a schematic diagram of a picture share page according to an exemplary embodiment. Referring to FIG. 9, the text input box is a "text input box 901" shown in FIG. 9. The first terminal is triggered to display the "keyboard panel 502" shown in FIG. 5 by performing a trigger operation on the "text input box 901."

In the above embodiments, two manners, i.e., automatically displaying the edit panel and manually triggering the display of the edit panel, are provided. The two manners can both quickly trigger the display of the edit panel, and further facilitate the user to input the text information by the edit panel on the premise of ensuring the display efficiency of the edit panel.

In some embodiments, the display form of the picture to be shared is related to whether to display the edit panel. In some embodiments, in the case that the edit panel is displayed in the picture share page, the first terminal displays the first quantity of pictures in the form of displaying a third quantity of pictures in each row on the displayed picture share page, wherein the third quantity is a preset and fixed quantity, such as 3. In some embodiments, in the case that the picture share page does not display the edit panel, the first terminal displays the first quantity of pictures in the form of displaying a third quantity of pictures in each row on the displayed picture share page, wherein the fourth quantity is a preset and fixed quantity, for example, 2. The third quantity is greater than the fourth quantity.

For example, referring to FIG. 5, taking the first quantity being 9 as an example, the pictures to be shared are tiled in the picture share page shown in FIG. 5 in the form of displaying 3 pictures in each row. Referring to FIG. 6, taking the first quantity being 9 as an example, the pictures to be shared are tiled in the picture share page shown in FIG. 6 in the form of displaying 2 pictures in each row.

In some embodiments, in the case that the edit panel is displayed in the picture share page, the first terminal displays the first quantity of pictures according to a first size in the displayed picture share page. In some embodiments, in the case that the edit panel is not displayed in the picture share page, the first terminal displays the first quantity of pictures based on a second size. The first size and the second size are both preset and fixed sizes, and the first size is less than the second size.

Referring to FIG. 5, the pictures to be shared are displayed according to a less size in the picture share page shown in FIG. 5. Referring to FIG. 6, the pictures to be shared are displayed according to a greater size in the picture share page shown in FIG. 6.

In this way, the display form of the image to be shared is determined based on whether the edit panel is displayed, which can ensure the display effect of the image to be shared.

S301 to S303 are the processes of performing subsequent picture share based on the second account displayed on the share panel. In some embodiments, the first terminal further displays unselected second accounts having the social relationship with the first account on the first terminal in the picture share page, such that the user selects more second accounts to share pictures. The corresponding process is that, the first terminal displays, in the displayed picture share page, the selected second account and unselected second accounts having the social relationship with the first account on the first terminal. Furthermore, the first terminal displays the unselected second account as being selected, that is, determines the selected second account as an account to be shared, in response to the select operation on unselected second account.

For example, referring to FIG. 8, the selected second account is displayed in the picture share page shown in FIG. 8, and an option corresponding to the selected second account is displayed as being checked. In addition, in the picture share page shown in FIG. 8, other accounts, i.e., unselected second accounts, having the social relationship with the first account on the first terminal are displayed, and options corresponding to the unselected second accounts are displayed as an unchecked state. In the case that the user wants to share pictures with more second accounts, the user can click the option corresponding to any unselected second account displayed in the picture share page, and then, the first terminal displays the option as the checked state in response to the tap operation for on option, and determines the second account corresponding to the option as the second account to be shared.

In the embodiments of the present disclosure, the user can select more second accounts and then share pictures to the selected second accounts by displaying a plurality of unselected second accounts having the social relationship with the first account on the first terminal, thereby improving the flexibility and efficiency of hum an-computer interaction.

In some embodiments, the first terminal can further select unselected second account by searching. The corresponding process is that, the first terminal displays an account search box in the displayed picture share page, and the account search box is used for searching for second accounts. Furthermore, the first terminal displays, in response to an account search keyword input in the account search box, the second account corresponding to the account search keyword.

For example, referring to FIG. 8, the account search box is a "search box 801" shown in FIG. 8 in the picture share page shown in FIG. 8. By inputting an account search keyword in the "search box 801," the first terminal can be triggered to search and display the second account corresponding to the search keyword.

In the above embodiments, the user can search for the second account to be shared based on the account search box by displaying the account search box, without looking through a plurality of second accounts one by one, thereby improving the efficiency of determining the second account to be shared and further improving the efficiency of sharing picture.

In S304, the first terminal acquires the input text information in response to an edit operation on the edit panel.

In the embodiments of the present disclosure, by providing the edit panel, the user can input the text information by the edit panel. And by triggering the send control, the user can send the text information to the selected second account when sending the picture to the selected second account, thereby increasing the amount of the sent information and improving the interaction experience of the user.

In S303 to S304, the edit panel is displayed on the picture share page, so as to facilitate the user to input the text information. It should be noted that the S303 to S304 are optional processes. In some embodiments, in the case that the picture share page is displayed, the first terminal only needs to perform the process of sending the picture in S305, without performing the process of displaying the edit panel in S303 and editing the text information in S304.

In S305, the first terminal sends, in response to the trigger operation on the send control, the at least two pictures and the text information to the second terminal corresponding to a second account selected by the select operation, so that the second terminal corresponding to the second account selected by the select operation is capable of receiving the at least two pictures and the text information.

For example, referring to any one of FIGS. 5 to 9, the send control may be a "send control" shown in FIGS. 5 to 9.

In some embodiments, the first terminal sends a picture share request to a server in response to the trigger operation on the send control, and the picture share request is configured to request to share the at least two pictures and the text information to the selected second account. The server receives the picture share request from the first terminal, and sends the at least two pictures and the text information, so that the second terminal corresponding to the second account selected by the select operation is capable of receiving the at least two pictures and the text information.

S305 is a process of sending the text information to the second terminal corresponding to the selected second account when the user inputs the text information by the edit panel. It should be understood that, if the first terminal does not perform S303 and S304, the first terminal does not need to perform the process of sending the text information to the second terminal corresponding to the selected second account. The corresponding process is that, the first terminal sends, in response to the trigger operation on the send control, the at least two pictures to the second terminal corresponding to the selected second account in the target application.

In S306, the first terminal displays a relevant page of the selected second account in the target application.

The process that the first terminal displays a relevant page of the selected second account in the target application is detailed as follows.

In some embodiments, the first terminal displays a session page of the selected second account in the target application, wherein the session page is configured to display a session record between the first account on the first terminal and the selected second account. In some embodiments, by taking the social media application as an example, the session page is a chatting page. In some embodiments, by taking the short video application as an example, the session page is a private message page.

In some embodiments, the first terminal displays a live-streaming room page of the selected second account in the target application, wherein the live-streaming room page is configured to display a live-streaming screen of the selected second account.

In some embodiments, the first terminal displays a personal page of the selected second account in the target application, and the personal page is configured to display account information of the selected second account. For example, the personal page is a personal homepage of the selected second account.

In some embodiments, the first terminal displays a moment page of the selected second account in the target application, and the moment page is configured to display moments of the selected second account. For example, the moment page is a work page of the selected second account, which is configured to display video work, picture work, or text work published by the selected second account.

In the above embodiments, by displaying the relevant page of the selected page, the user can be interacted with the second account based on the relevant page of the second account, thereby improving the interaction experience of the user.

In S307, the first terminal displays share prompt information of the picture in the relevant page of the selected second account, and the share prompt information is configured to indicate that the at least two pictures are in the share process or that the at least two pictures have been successfully shared.

In some embodiments, the first terminal displays the share prompt information of the picture in a form of a pop-up window in the relevant page of the selected second account. In some embodiments, the first terminal displays the share prompt information of the picture in a form of a floating layer in the relevant page of the selected second account.

For example, the content of the share prompt information is "send 38%," or, the content of the share prompt information may be "successfully sent." In the embodiments of the present disclosure, the amount of displayed information is increased by displaying the share prompt information, such that the user can learn a share progress of the picture in time.

It should be noted that S307 is an optional process. In some embodiments, in the case that the relevant page of the selected second account is displayed, the first terminal does not need to perform the process of displaying the share prompt information.

In some embodiments, a method for sharing pictures performed by a first terminal is provided. The method including: displaying a share panel including a plurality of application icons; displaying, in the share panel, at least one second account having a social relationship with a first account in response to a trigger operation on an application icon of a target application, wherein the first account is a logged-in account on the first terminal, and the target application is an application corresponding to the application icon triggered by a user; displaying a picture share page in response to a select operation on any second account, wherein the picture share page displays at least two pictures and a send control; and sending, in response to a trigger operation on the send control, the at least two pictures, to a second terminal corresponding to a selected second account selected by a select operation, so that the second terminal is capable of receiving the at least two pictures.

With the technical solutions according to the embodiments of the present disclosure, a user can share one or more pictures via one share interface (e.g., a share panel) on a first terminal wherein the share interface includes a picture set and a plurality of applications (e.g., social media applications). The user can trigger a specific application to cause the display of one or more associated accounts associated with a first account corresponding to the first terminal (the triggered application is referred to as a target application in the present disclosure). Upon the selection of the associated accounts, the first terminal is triggered to display a picture share page. By displaying the pictures to be shared, the amount of information displayed by the picture share page is increased, such that a user can view the picture to be shared. In this way, the picture can be shared via an interface including the picture set, which allows the user to perform the picture sharing operations on the picture set in the first terminal. That is, there is no need for user to finding a target application in the first terminal and then activate the target application in order to share pictures. That is, rather than activation of a target application each time the user wants to share pictures, the present disclosure provides a picture share interface where the user can select pictures to share with the associated account in a target application, which simplifies the process of sharing the pictures with the associated accounts in an application by reducing the interaction path for picture sharing. Furthermore, the method for sharing pictures to unselected second account in the target application based on the picture set is implemented, and the picture can be shared to the second account in the target application, thereby further reducing interaction paths of sharing pictures and improving the efficiency of sharing pictures.

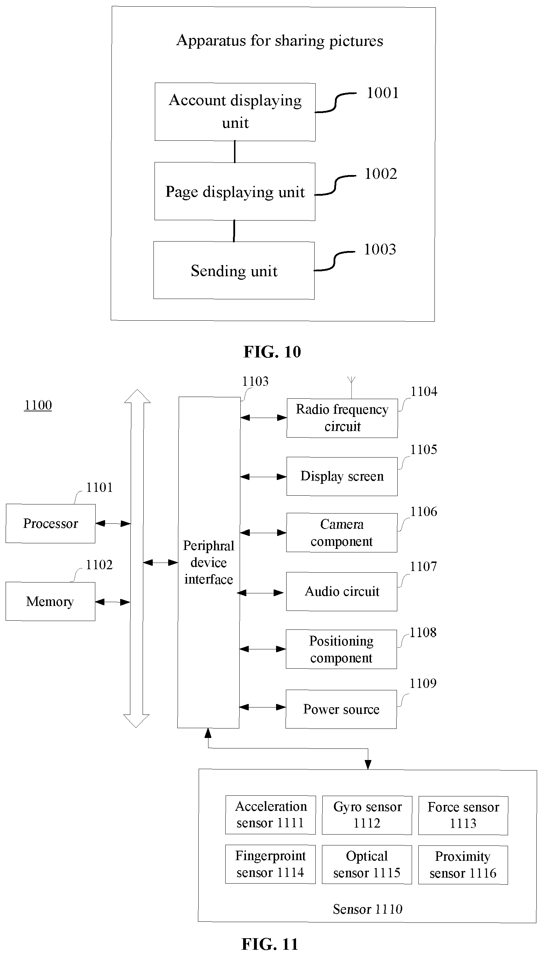

FIG. 10 is a flowchart showing an apparatus for sharing pictures according to an exemplary embodiment. Referring to FIG. 10, the apparatus includes an account displaying unit 1001, a page displaying unit 1002, and a sending unit 1003.

The account displaying unit 1001 is configured to display, in response to a share operation on at least two pictures in the picture set of the first terminal, at least one second account having a social relationship with a first account on the first terminal.

The page displaying unit 1002 is configured to display a picture share page in response to a select operation on any second account, wherein the picture share page displays the at least two pictures and a send control.

The sending unit 1003 is configured to send, in response to a trigger operation on the send control, the at least two pictures, so that the second terminal corresponding to a second account selected by the select operation is capable of receiving the at least two pictures.

With the technical solutions according to the embodiments of the present disclosure, the amount of information displayed by the picture share page is increased, such that a user can view the picture to be shared. Furthermore, the method for sharing pictures to unselected second account in the target application based on the picture set is implemented, and the picture can be shared to the second account in the target application, thereby reducing interaction paths of sharing pictures and improving the efficiency of sharing pictures.

In some embodiments, the page displaying unit 1002 is further configured to: display an edit panel in the displayed picture share page, wherein the edit panel is used for inputting text information; and the sending unit 1003 is further configured to: send the text information input from the edit panel in response to the trigger operation on the send control, so that the second terminal is capable of receiving the text information.

In some embodiments, the page displaying unit 1002 is further configured to: automatically display the edit panel in the displayed picture share page; or display the edit panel in the displayed picture share page in response to a trigger operation on a text input box in the picture share page.

In some embodiments, a quantity of the pictures is a first quantity; and the page displaying unit 1002 is configured to: display the first quantity of pictures in the displayed picture share page; or display a second quantity of pictures and a picture view control in the displayed picture share page, wherein the second quantity is less than the first quantity, and the picture view control is used for viewing unshown pictures.

In some embodiments, the apparatus further includes: a picture displaying unit, configured to: display, in response to a slide operation on a picture display region of the picture share page, the picture corresponding to the slide operation; display, in response to a position adjust operation on any picture in the picture share page, an adjusted position to which the picture moves; or delete the picture from the picture share page in response to a delete operation on any picture in the picture share page.

In some embodiments, the page displaying unit 1002 is further configured to: display, in the displayed picture share page, the selected second account and unselected second accounts having a social relationship with a first account on the first terminal; and the apparatus further includes: a determining unit, configured to: display unselected second account as being selected in response to a select operation on the unselected second account.

In some embodiments, the page displaying unit 1002 is further configured to: display an account search box in the displayed picture share page, wherein the account search box is used for searching for second accounts; and the account displaying unit 1001 is further configured to: display, based on an account search keyword input in the account search box, a second account corresponding to the account search keyword.

In some embodiments, the account displaying unit 1001 is configured to: display options corresponding to a plurality of pictures in the picture set of the first terminal; determine the selected picture as a picture to be shared in response to a select operation on the options corresponding to the plurality of pictures; and display, in response to a trigger operation on a share control, the at least one second account having the social relationship with the first account on the first terminal.

In some embodiments, the page displaying unit 1002 is further configured to: display a session page of the selected second account in the target application, wherein the session page is configured to display a session record between the first account on the first terminal and the selected second account; display a live-streaming room page of the selected second account in the target application, wherein the live-streaming room page is configured to display a live-streaming screen of the selected second account; display a personal page of the selected second account in the target application, wherein the personal page is configured to display account information of the selected second account; or display a moment page of the selected second account in the target application, wherein the moment page is configured to display moments of the selected second account.

In some embodiments, the apparatus further includes: an information displaying unit, configured to: display share prompt information of these pictures, wherein the share prompt information is configured to indicate that the at least two pictures are in the share process or that the at least two pictures have been successfully shared.

It should be noted that when the picture is shared by the apparatus for sharing pictures according to the above embodiments, the partitioning of the above functional modules is taken as an example. In actual applications, the foregoing functions can be allocated to different functional modules to achieve as required. That is, the internal structure of a device is partitioned into different functional modules to complete all or part of the functions as described above. In addition, the apparatus for sharing pictures and the method for sharing pictures according to the foregoing embodiments belong to the same concept, and the specific implementation process is detailed in the method embodiments, which is not repeated here.

An embodiment of the present disclosure provides a computer device. The computer device includes one or more processors; and a memory configured to store one or more program codes executable by the one or more processor. The one or more processors, when loading and executing the one or more program codes, are caused to perform the method for sharing pictures as described above.

In some embodiments, the computer device in the embodiments of the present disclosure may be provided as a first terminal. FIG. 11 is a structural block diagram of a first terminal 1100 according to an exemplary embodiment. The first terminal 1100 is a smart phone, a tablet computer, a Moving Picture Experts Group Audio Layer III (MP3) player, a Moving Picture Experts Group Audio Layer IV (MP4) player, a laptop, or desk computer. In some embodiments, the first terminal 1100 is further referred to as a user equipment (UE), a portable terminal, a laptop terminal, a desk terminal, or the like.

Generally, the first terminal 1100 includes a processor 1101 and a memory 1102.

The processor 1101 includes one or more processing cores, such as a 4-core processor, and an 8-core processor. In some embodiments, the processor 1101 is implemented by at least one hardware of a digital signal processor (DSP), a field-programmable gate array (FPGA), or a programmable logic array (PLA). In some embodiments, the processor 1101 further includes a primary processor and a coprocessor. The main processor is a processor configured to process the data in an awake state, and is also referred to as a central processing unit (CPU). The coprocessor is a low-power-consumption processor configured to process the data in a standby state. In some embodiments, the processor 1101 is integrated with a graphics processing unit (GPU), which is configured to render and draw the content that needs to be displayed by a display screen. In some embodiments, the processor 1101 further includes an Artificial Intelligence (AI) processor configured to process computational operations related to machine learning.

The memory 1102 includes one or more computer-readable storage mediums. In some embodiments, the memory 1102 is non-transitory. In some embodiments, the memory 1102 further includes a high-speed random-access memory, and a non-volatile memory, such as one or more disk storage devices and flash storage devices. In some embodiments, a non-transitory computer-readable storage medium in the memory 1102 is configured to store one or more program codes; wherein the one or more program codes, when loaded and executed by the processor 1101, cause the processor 1101 to perform to perform the processes performed by the first terminal in the method for sharing pictures according to the embodiments of the present disclosure.

In some embodiments, the first terminal 1100 further includes a peripheral device interface 1103 and at least one peripheral device. In some embodiments, the processor 1101, the memory 1102, and the peripheral device interface 1103 are connected by a bus or a signal line. Each peripheral device is connected to the peripheral device interface 1103 by a bus, a signal line, or a circuit board. Specifically, the peripheral device includes at least one of a radio frequency circuit 1104, a display screen 1105, a camera assembly 1106, an audio circuit 1107, a positioning assembly 1108, and a power source 1109.

The peripheral device interface 1103 is configured to connect at least one peripheral device associated with an input/output (I/O) to the processor 1101 and the memory 1102. In some embodiments, the processor 1101, the memory 1102, and the peripheral device interface 1103 are integrated on the same chip or circuit board. In some embodiments, any one or two of the processor 1101, the memory 1102, and the peripheral device interface 1103 are implemented on a separate chip or circuit board, which is not limited in the embodiments of the present disclosure.

The radio frequency circuit 1104 is configured to receive and transmit a radio frequency (RF) signal, which is also referred to as an electromagnetic signal. The radio frequency circuit 1104 communicates with a communication network and other communication devices via the electromagnetic signal. The radio frequency circuit 1104 converts an electrical signal into the electromagnetic signal to transmit, or converts the received electromagnetic signal into the electrical signal. In some embodiments, the RF circuit 1104 includes an antenna system, an RF transceiver, one or more amplifiers, a tuner, an oscillator, a digital signal processor, a codec chipset, a subscriber identity module card, and the like. In some embodiments, the RF circuit 1104 is communicated with other terminals via at least one wireless communication protocol. The wireless communication protocol includes, but is not limited to, a metropolitan area network (MAN), various generations of mobile communication networks (2G, 3G, 4G, and 5G), a wireless local area network (LAN) and/or a wireless fidelity (Wi-Fi) network. In some embodiments, the RF circuit 1104 further includes near-field communication (NFC) related circuits, which is not limited in the present disclosure.

The display screen 1105 is configured to display a user interface (UI). In some embodiments, the UI includes graphics, text, icons, videos, and any combination thereof. In the case that the display screen 1105 is a touch display screen, the display screen 1105 further possesses a capacity of acquiring touch signals on or over the surface of the display screen 1105. In some embodiments, the touch signal is input into the processor 1101 as a control signal for processing. In this case, the display screen 1105 is further configured to provide virtual buttons and/or virtual keyboards, which are also referred to as soft buttons and/or soft keyboards. In some embodiments, the display screen 1105 may be one, and is disposed on the front panel of the first terminal 1100. In some other embodiments, the display screen 1105 is at least two, and are disposed on different surfaces of the first terminal 1100 or in a folded design. In some other embodiments, the display screen 1105 is a flexible display screen disposed on the curved or folded surface of the first terminal 1100. Even the display screen 1105 may be disposed as an irregular shape other than a rectangle. That is, the display screen 1105 may be an irregular-shaped screen. In some embodiments, the display screen 1105 is prepared from a material such as a liquid crystal display (LCD), an organic light-emitting diode (OLED), or the like.

The camera assembly 1106 is configured to capture images or videos. In some embodiments, the camera component 1106 includes a front camera and a rear camera. Generally, the front camera is disposed on the front panel of the first terminal, and the rear camera is disposed on the back of the first terminal. In some embodiments, the rear camera may be at least two, and may be any one of a primary camera, a depth-of-field camera, a wide-angle camera, and a telephoto camera, so as to implement a background blurring function achieved by fusion of the main camera and the depth-of-field camera, panoramic shooting and virtual reality (VR) shooting functions or other fusion shooting functions achieved by fusion of the main camera and the wide-angle camera. In some embodiments, the camera component 1106 further includes a flashlight. In some embodiments, the flashlight is a mono-color temperature flashlight or a two-color temperature flashlight. The two-color temperature flash is a combination of a warm flashlight and a cold flashlight, and can be used for light compensation at different color temperatures.

The audio circuit 1107 includes a microphone and a speaker. The microphone is configured to acquire sound waves of users and environments, and convert the sound waves into electrical signals for inputting into the processor 1101 for processing, or inputting into the RF circuit 1104 for voice communication. In some embodiments, for the purpose of stereo acquisition or noise reduction, there are a plurality of microphones, which are disposed at different locations of the first terminal 1100. In some embodiments, the microphone is further an array microphone or an omnidirectional acquisition microphone. The speaker is configured to convert the electrical signals from the processor 1101 or the RF circuit 1104 into the sound waves. In some embodiments, the speaker is a conventional thin film speaker or a piezoelectric ceramic speaker. In the case that the speaker is the piezoelectric ceramic speaker, the electrical signal can be converted into not only human-audible sound waves but also the sound waves which are inaudible to humans for ranging and the like. In some embodiments, the audio circuit 1107 further includes a headphone jack.

The positioning assembly 1108 is configured to position the current geographic location of the first terminal 1100 to implement navigation or location-based service (LBS). In some embodiments, the positioning component 1108 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power source 1109 is configured to power up various components in the first terminal 1100. In some embodiments, the power source 1109 is alternating current, direct current, a disposable battery, or a rechargeable battery. In the case that the power source 1109 includes the rechargeable battery, the rechargeable battery supports wired charging or wireless charging. The rechargeable battery further supports the fast charging technology.

In some embodiments, the first terminal 1100 further includes one or more sensors 1110. The one or more sensors 1110 include, but are not limited to, an acceleration sensor 1111, a gyro sensor 1112, a force sensor 1113, a fingerprint sensor 1114, an optical sensor 1115, and a proximity sensor 1116.

The acceleration sensor 1111 detects magnitudes of accelerations on three coordinate axes of a coordinate system established by the first terminal 1100. For example, the acceleration sensor 1111 is configured to detect components of a gravitational acceleration on the three coordinate axes. The processor 1101 controls the touch display screen 1105 to display a user interface in a landscape view or a portrait view based on a gravity acceleration signal acquired by the acceleration sensor 1111. The acceleration sensor 1111 is further configured to acquire motion data of a game or a user.

The gyro sensor 1112 is configured to detect a body direction and a rotation angle of the first terminal 1100. In some embodiments, the gyro sensor 1112 cooperates with the acceleration sensor 1111 to capture a 3D motion of the user on the first terminal 1100. Based on the data captured by the gyro sensor 1112, the processor 1101 may implement the following functions: motion sensing (such as changing the UI in response to a tilt operation of the user), image stability in shooting, game control, and inertial navigation.

The force sensor 1113 is disposed on a side frame of the first terminal 1100 and/or a substratum of the touch display screen 1105. In the case that the force sensor 1113 is disposed on the side frame of the first terminal 1100, a holding signal of the user on the first terminal 1100 may be detected. The processor 1101 may perform a left-right hand recognition or a quick operation based on the holding signal acquired by the force sensor 1113. In the case that the force sensor 1113 is disposed on the substratum of the touch display screen 1105, the processor 1101 controls an operable control on the UI based on a press operation of the user on the touch display screen 1105. The operable control includes at least one of a button control, a scroll bar control, an icon control, and a menu control.

The fingerprint sensor 1114 is configured to acquire a fingerprint of the user. The processor 1101 identifies the identity of the user based on the fingerprint acquired by the fingerprint sensor 1114, or the fingerprint sensor 1114 identifies the identity of the user based on the acquired fingerprint. In the case that the identity of the user is identified as a trusted identify, the processor 1101 authorizes the user to perform related sensitive operations, such as unlocking the screen, viewing encrypted information, downloading software, paying, and changing settings. In some embodiments, the fingerprint sensor 1114 is provided on the front, back, or side of the first terminal 1100. In the case that the first terminal 1100 is provided with a physical button or a Logo of a manufacturer, the fingerprint sensor 1114 is integrated with the physical button or the Logo of the manufacturer.

The optical sensor 1115 is configured to acquire ambient light intensity. In some embodiments, the processor 1101 may control the display luminance of the touch display screen 1105 based on the intensity of the ambient light acquired by the optical sensor 1115. Specifically, in the case that the intensity of the ambient light is high, the display luminance of the touch display screen 1105 is increased; and when the intensity of the ambient light is low, the display luminance of the touch display screen 1105 is decreased. In some embodiments, the processor 1101 further dynamically adjusts shooting parameters of the camera component 1106 based on the intensity of the ambient light acquired by the optical sensor 1115.

The proximity sensor 1116, also referred to as a distance sensor, is generally disposed on the front panel of the first terminal 1100. The proximity sensor 1116 is configured to capture a distance between the user and a front surface of the first terminal 1100. In some embodiments, in the case that the proximity sensor 1116 detects that the distance between the user and the front surface of the first terminal 1100 gradually decreases, the processor 1101 controls the touch display screen 1105 to switch from a screen-on state to a screen-off state. In the case that the proximity sensor 716 detects that the distance between the user and the front surface of the first terminal 1100 gradually increases, the processor 1101 controls the touch display screen 1105 to switch from the screen-off state to the screen-on state.

In some embodiments, a computer-readable storage medium including a program code therein is provided, such as a memory 1102 including a program code therein; wherein the program code, when loaded and executed by a processor of a computer device, causes the computer device to perform the method for sharing pictures according to the above embodiments. In some embodiments, the computer-readable storage medium is a non-volatile computer-readable storage medium. For example, the computer-readable storage medium is a read-only memory (ROM), a random-access memory (RAM), a compact disc read-only memory (CD-ROM), a magnetic tape, a floppy disk, an optical data storage device, and or like.

In some embodiments, a computer program product is further provided. The computer program product includes a computer program therein; wherein the computer program, when loaded and run by a processor of a computer device, causes the computer device to perform the method for sharing pictures according to the above embodiments.

In some embodiments, the computer program involved in the embodiments of the present disclosure may be loaded and run on one computer device, or loaded and run on a plurality of computer devices located at one site, or loaded and run on a plurality of computer devices distributed at a plurality of locations and interconnected by a communication network. The plurality of computer devices distributed at a plurality of locations and interconnected by the communication network can form a blockchain system.

The embodiments of the present disclosure may be implemented independently or in combination with other embodiments, which are regarded as the protection scope of the present disclosure.

## Claims

1. A method for sharing pictures, **characterized by**, comprising:
displaying a share panel including a plurality of application icons;
displaying (201, 301), in the share panel, at least one second account having a social relationship with a first account in response to a trigger operation on an application icon of a target application, wherein the first account is a logged-in account on the first terminal, and the target application is an application corresponding to the application icon triggered by a user;
displaying (202, 302) a picture share page in response to a select operation on any second account, wherein the picture share page displays at least two pictures and a send control; and
sending (203, 305), in response to a trigger operation on the send control, the at least two pictures, to a second terminal corresponding to a selected second account selected by a select operation, so that the second terminal is capable of receiving the at least two pictures.

2. The method according to claim 1, wherein
said displaying (202, 302) the picture share page comprises:
displaying an edit panel in a displayed picture share page, wherein the edit panel is used for inputting text information; and
the method further comprises:
sending the text information input from the edit panel in response to the trigger operation on the send control.

3. The method according to claim 2, wherein said displaying the edit panel in the displayed picture share page comprises:
automatically displaying the edit panel in the displayed picture share page; or
displaying the edit panel in the displayed picture share page, in response to a trigger operation on a text input box in the picture share page.

4. The method according to any one of claims 1 to 3, wherein said displaying (202, 302) the picture share page comprises:
displaying a first quantity of pictures in a displayed picture share page; or
displaying a second quantity of pictures and a picture view control in the displayed picture share page, wherein the second quantity is less than the first quantity, and the picture view control is used for viewing unshown pictures.

5. The method according to any one of claims 1 to 4, further comprising at least one of:
displaying, in response to a slide operation on a picture display region of the picture share page, a picture corresponding to the slide operation;
displaying, in response to a position adjust operation on any picture in the picture share page, an adjusted position to which the picture moves; and
deleting the picture from the picture share page in response to a delete operation on any picture in the picture share page.

6. The method according to any one of claims 1 to 5, wherein
said displaying the picture share page comprises:
displaying (202, 302), in a displayed picture share page, a selected second account and unselected second accounts having a social relationship with the first account in the target application; and
the method further comprises:
displaying, in response to a select operation on the unselected second account, the unselected second account as being selected.

7. The method according to any one of claims 1 to 6, wherein said displaying (202, 302) the picture share page comprises:
displaying an account search box in the displayed picture share page, wherein the account search box is used for searching for an account;
the method further comprises:
displaying, based on an account search keyword input in the account search box, an account corresponding to the account search keyword.

8. The method according to any one of claims 1 to 7, further comprising:
displaying options corresponding to a plurality of pictures in the picture set of the first terminal;
determining selected picture as the picture to be shared in response to a select operation on the options corresponding to the plurality of pictures; and
displaying, in response to a trigger operation on a share control, the at least one second account having the social relationship with the first account in the target application.

9. The method according to any one of claims 1 to 8, further comprising at least one of:
displaying a session page of the selected second account in the target application, wherein the session page is configured to display a session record between the first account and the selected second account;
displaying a live-streaming room page of the selected second account in the target application, wherein the live-streaming room page is configured to display a live-streaming screen of the selected second account;
displaying a personal page of the selected second account in the target application, wherein the personal page is configured to display account information of the selected second account; and
displaying a moment page of the selected second account in the target application, wherein the moment page is configured to display moments of the selected second account.

10. The method according to any one of claims 1 to 9, further comprising:
displaying share prompt information of the picture, wherein the share prompt information is configured to indicate that the at least two pictures are in a share process or the at least two pictures have been successfully shared.

11. An apparatus for sharing pictures, comprising:
an account displaying unit (1001), configured to display, in a share panel, at least one second account having a social relationship with a first account in response to a trigger operation on an application icon of a target application, wherein the first account is a logged-in account on the first terminal, and the target application is an application corresponding to the application icon triggered by a user;
a page displaying unit (1002), configured to display a picture share page in response to a select operation on any second account, wherein the picture share page displays at least two pictures and a send control; and
a sending unit (1003), configured to send, in response to a trigger operation on the send control, the at least two pictures, so that a second terminal corresponding to a second account selected by the select operation is capable of receiving the at least two pictures.

12. The apparatus for sharing pictures according to claim 11, wherein
the page displaying unit (1002) is configured to: display an edit panel in a displayed picture share page, wherein the edit panel is used for inputting text information; and
the sending unit (1003) is configured to: send the text information input from the edit panel in response to the trigger operation on the send control.

13. The apparatus for sharing pictures according to claim 12, wherein the page displaying unit (1002) is configured to:
automatically display the edit panel in the displayed picture share page; or
display the edit panel in the displayed picture share page in response to a trigger operation on a text input box in the picture share page.

14. The apparatus for sharing pictures according to any one of claims 11 to 13, wherein the page displaying unit (1002) is configured to:
display a first quantity of pictures in a displayed picture share page; or
display a second quantity of pictures and a picture view control in the displayed picture share page, wherein the second quantity is less than the first quantity, and the picture view control is used for viewing unshown pictures.

15. A non-volatile computer-readable storage medium storing one or more program codes therein, wherein the one or more program codes, when loaded and executed by a processor of a computer device, cause the computer device to perform the method for sharing pictures as defined in any one of claims 1 to 10.
